# EUROPÄISCHE PATENTSCHRIFT

(11) **EP 0 811 041 B1**
(45) Veröffentlichungstag und Bekanntmachung des Hinweises auf die Patenterteilung: **21.07.1999**
(21) Anmeldenummer: 95910526.3
(22) Anmeldetag: 27.02.1995
(51) Int. Cl.: C09B 67/22, C09B 29/08, D06P 3/54, D06P 3/82

(54) **VERFAHREN ZUM FÄRBEN VON POLYESTER UND POLYESTERHALTIGEN TEXTILMATERIALIEN**
METHOD OF DYEING POLYESTER AND POLYESTER-CONTAINING TEXTILE MATERIALS
PROCEDE PERMETTANT DE TEINTER DU POLYESTER ET DES MATERIAUX TEXTILES CONTENANT DU POLYESTER

(43) Veröffentlichungstag der Anmeldung: 10.12.1997
(73) Patentinhaber: DyStar Textilfarben GmbH & Co. Deutschland KG, 60318 Frankfurt am Main (DE)
(72) Erfinder: BÜHLER, Ulrich, D-63755 Alzenau (DE)
(86) Internationale Anmeldenummer: EP9500702
(87) Internationale Veröffentlichungsnummer: WO9626982

(56) Entgegenhaltungen:
- EP-A- 0 216 242
- EP-A- 0 489 972
- EP-A- 0 526 170
- DE-A- 4 329 761
- FR-A- 2 383 924
- GB-A- 2 034 736
- GB-A- 2 226 051
- RESEARCH DISCLOSURE, Bd. 320, Nr. 19, Dezember 1990 NEW YORK, Seiten 928-939, W. JANSSENS ET. AL. 'thermal dye transfer'

## Beschreibung

Die vorliegende Erfindung betrifft ein Verfahren zum Färben von textilem Polyester oder polyesterhaltigen Textilmaterialien mit roten Dicyanazo-Farbstoffen.

In der Regel werden textiles Polyester oder polyesterhaltige Textilmaterialien mit Dispersionsfarbstoffen aus wäßrigem Färbebad bei HT-Bedingungen in einem Temperaturbereich von 120 bis 140°C bei pH-Werten von 4 bis 6 gefärbt, da bei höheren pH-Werten die Dispersionsfarbstoffe teilweise oder ganz zerstört werden. Bei höheren pH-Werten kommt es somit zu Farbstärkeverlusten und Farbtonabweichungen beim Färben und die Färbungen sind nicht reproduzierbar. Nun wird normalerweise die Polyesterfaser in einem separaten Schritt vor dem Färben einer alkalischen Spülbehandlung unterworfen, um Hilfsmittel, die beim Weben oder Spinnen der Faser eingesetzt worden sind, zu entfernen. Diese Hilfsmittel sind z.B. Ölungs- oder Schlichtemittel, die bei ihrem Vorhandensein ein egales Anfärben der Polyesterfaser erschweren oder unmöglich machen würden. Die alkalische Behandlung wird auch durchgeführt, um Oligomere der Polyesterfaser, die beim Färbevorgang aus dem Faserinneren herausgetreten sind und die Färbung unegal erscheinen lassen, zu zerstören und in der wäßrigen Färbeflotte zu halten. Die genannten Oligomere sind insbesondere beim Garnfärben unerwünscht, da sie sich beim Spinnen der gefärbten Garne in den Spinnapparaten an den Stellen, wo das Garn umgelenkt wird, durch Abrieb pulverartig absetzen. Sie verschmutzen so die Apparatur und führen dazu, daß das Garn reißt.

Diese alkalische Spülbehandlung wird zweckmäßigerweise bei erhöhter Temperatur durchgeführt. Um Zeit und Energie zu sparen und um die Anzahl der für beide Prozesse, alkalische Vorbehandlung und Färben, benötigten Apparate zu reduzieren, war es schon immer das Ziel, beide Prozesse zu einem Ein-Bad-Spül- und Färbeverfahren zu vereinigen. Zur Realisierung dieses Zieles müssen allerdings Verfahren entwickelt werden, die im wäßrigen Färbebad bei pH 8 bis pH 11 reproduzierbare Färbungen ergeben.

Polyester-Zellulose- bzw. Polyester-Polyamid-Mischgewebe werden mit Dispersions- bzw. Reaktivfarbstoffen aus wäßrigem Färbebad in der Regel in zwei Färbeschritten gefärbt. Wie oben erwähnt, werden dabei die Dispersionsfarbstoffe auf den Polyesteranteil bei pH 4 bis 6 appliziert, die Reaktivfarbstoffe auf den Zellulose- bzw. Polyamid-Anteil im pH-Bereich zwischen pH 11 und 13. Auch hier war es in der Vergangenheit das Ziel, ein einbadiges Applikationsverfahren für beide Farbstoffklassen zu entwickeln. Hierfür hat man nach Reaktivfarbstoffen gesucht, die bereits bei pH-Werten zwischen 8 und 11 gefärbt werden können, und es waren auch hier Verfahren erforderlich, die sicherstellen, daß unter diesen Bedingungen der Polyesteranteil mit Dispersionsfarbstoffen reproduzierbar gefärbt werden kann.

Zur Behandlung der Mängel bisheriger Verfahren wird in der DE-A 39 38 631 eine Methode beschrieben, bei der Dispersionsfarbstoffe im pH-Bereich zwischen pH 8 und 10 in Gegenwart mindestens einer, gegebenenfalls am Stickstoff substituierter Aminosäure und/oder eines Alkalimetallsalzes einer gegebenenfalls am Stickstoff substituierten Aminosäure gefärbt werden.

So können beispielsweise mit dieser Methode mit dem Farbstoff der Formel 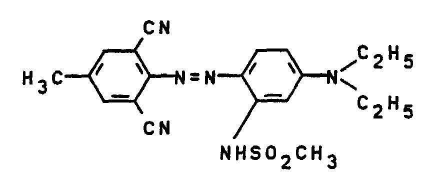 bei pH 9,5 brillante Rotfärbungen im Farbton des anthrachinoiden C.I.Disperse Red 60 erhalten werden (Anwendungsbeispiel 33 der DE-A 39 38 631). Die Alkalistabilität dieses Farbstoffs reicht aber für Färbungen bei höheren pH-Werten oder zur effektiven Durchführung der oben genannten Spülbehandlung nicht aus. Gleiches gilt auch für die handelsübliche Mischung aus den Farbstoffen der Formel 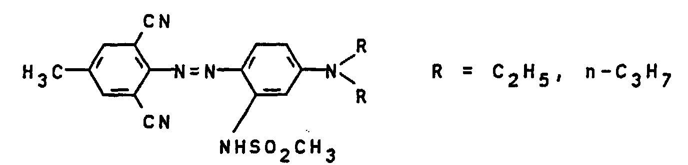 der bei höheren pH-Werten Farbstärkeverluste und Farbtonabweichungen zeigt. Der Grund dafür dürfte in der Acidität des Sulfonamid-Wasserstoffs liegen, wie sie beispielsweise bei R.O.C. Norman "Principles of Organic Synthesis", Methnen und Co. Ltd. und Science Paperbacks, 1968, auf Seite 66 beschrieben wird. Danach führt die genannte Acidität beim Färben bei höheren pH-Werten zur wenigstens partiellen Farbsalzbildung.

Aus der EP-A 501 238 sind bereits rote Dicyanazofarbstoffe bekannt, mit denen Polyester oder polyesterhaltige Fasermaterialien nach dem HT-Verfahren im pH-Bereich zwischen 8 und 11 gefärbt werden können. Diese Farbstoffe besitzen zwar eine hohe pH-Stabilität, aber nicht die gewünschte Brillanz. Außerdem kommen sie im Farbton nicht nahe genug an C.I. Disperse Red 60 heran und haben auch Mängel im Hinblick auf ihre Application und ihre Gebrauchsechtheiten.

Aufgabe der vorliegenden Erfindung ist es deshalb, alkalistabile Farbstoffe bereitzustellen, die brillante Rotfärbungen mit ausreichenden Gebrauchsechtheiten liefern.

Es wurde nun überraschenderweise gefunden, daß ausgewählte Dicyanazofarbstoffe diese Aufgabe lösen. Diese Dicyanazofarbstoffe sind teilweise bereits aus der DE-A 27 11 130 bekannt, allerdings ohne daß ihre besondere Eignung für die Alkalifärberei bekannt oder naheliegend gewesen wäre.

Die Erfindung betrifft somit ein Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I 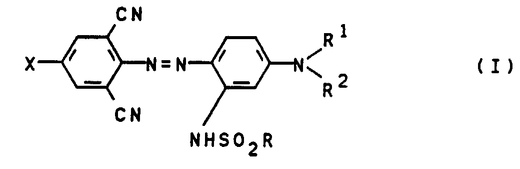 einsetzt, worin
X (C₁-C₃)-Alkyl
R (C₁-C₆)-Alkyl und
R¹ und R² unabhängig voneinander lineares (C₂-C₄)-Alkyl bedeuten, wobei R¹ und R² unabhängig voneinander (C₃-C₄)-Alkyl bedeuten, falls R für Methyl steht.

Für X stehendes (C₁-C₃)-Alkyl bedeutet beispielsweise Methyl, Ethyl, i-Propyl oder n-Propyl, wobei Ethyl bevorzugt und Methyl besonders bevorzugt ist.

Für R stehendes (C₁-C₆)-Alkyl bedeutet beispielsweise Methyl, Ethyl, n-Propyl, i-Propyl, n-Butyl, i-Butyl, sek-Butyl, n-Pentyl, i-Pentyl und n-Hexyl.

Bevorzugt steht R für (C₃-C₅)-Alkyl.

Für R¹ und R² stehendes lineares (C₂-C₄)-Alkyl bedeutet beispielsweise Ethyl, n-Propyl und n-Butyl.

Bevorzugt sind R¹ und R² gleich und bedeuten Ethyl oder n-Propyl.

Bevorzugte erfindungsgemäß einzusetzende Farbstoffe der allgemeinen Formel I sind solche, in denen die Summe der Kohlenstoffatome in den Resten X, R, R¹ und R² 8 bis 14, besonders bevorzugt 9 bis 12, beträgt.

Besonders bevorzugte Farbstoffe der allgemeinen Formel I weisen mehrere der oben genannten bevorzugten Merkmale auf.

Die vorliegende Erfindung betrifft auch Monoazofarbstoffe der allgemeinen Formel I 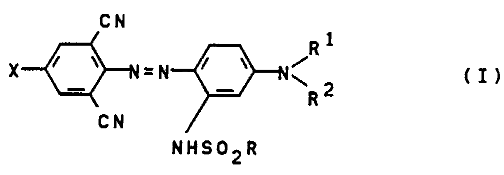 worin
X (C₁-C₃)-Alkyl
R (C₅-C₆)-Alkyl und
R¹ und R² unabhängig voneinander lineares (C₂-C₄)-Alkyl bedeuten.

Bevorzugte erfindungsgemäße Farbstoffe der allgemeinen Formel I sind solche, die die oben als bevorzugt beschriebenen Merkmale aufweisen.

Die Farbstoffe der allgemeinen Formel I können nach den dem Fachmann bekannten Methoden zur Herstellung von Dicyanazofarbstoffen hergestellt werden. Insbesondere können sie durch Cyanaustausch aus Verbindungen der allgemeinen Formel II 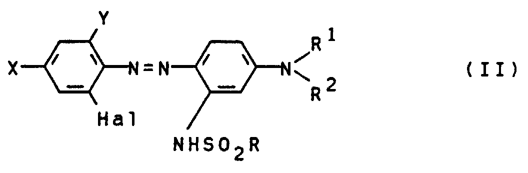 worin
Y Cyan oder Hal,
Hal ein Halogenatom, wie Chlor oder insbesondere Brom, bedeuten und X, R, R¹ und R², wie oben angegeben, definiert ist, hergestellt werden.

Das Cyanaustauschverfahren ist beipsielsweise in der DE-A 27 11 130 beschrieben. Auch die Herstellung der Verbindungen der allgemeinen Formel II kann analog den dortigen Angaben erfolgen.

Das erfindungsgemäße Verfahren kann mit einem Farbstoff der allgemeinen Formel I ausgeführt werden. Es kann aber auch mit zwei, drei oder vier Farbstoffen der allgemeinen Formel I ausgeführt werden, wobei aber zwei und drei Farbstoffe bevorzugt sind. Der Anteil eines Farbstoffs in diesen Fällen beträgt bevorzugt 5 bis 95 Gew.%, besonders bevorzugt 20 bis 70 Gew.%, jeweils bezogen auf die Gesamtfarbstoffmenge.

Werden mehrere Farbstoffe der allgemeinen Formel I eingesetzt, so unterscheiden sich diese bevorzugt nur in der Bedeutung der Reste R oder nur in der Bedeutung der Reste R¹ und R², die innerhalb eines Farbstoffs gleich sind.

Das erfindungsgemäße Verfahren wird bevorzugt unter HT-Bedingungen ausgeführt, d.h. in wäßriger Färbeflotte bei Temperaturen zwischen 120°C und 140°C in einem Färbeautoklaven. Der pH-Wert liegt bevorzugt bei pH 9 bis pH 10.

Die erfindungsgemäßen Farbstoffe der allgemeinen Formel I können nicht nach dem erfindungsgemäßen Verfahren, sondern auch in anderen üblichen Verfahren zum Färben und Bedrucken von hydrophoben synthetischen Textilmaterialien, z.B. unter HT-Bedingungen im pH-Bereich zwischen 4 und 11, im sogenannten Thermosol-Prozess oder aber nach einem Druckprozeß auf die Faser appliziert werden.

Die nach dem erfindungsgemäßen Verfahren zu färbenden Polyester sind insbesondere solche auf Basis von Polyethylenglykolterephthalaten. Polyesterhaltige Textilmaterialien sind z.B. Mischungen aus Polyester und Polyamiden.

Bei dem erfindungsgemäßen Verfahren werden die Farbstoffe oder Farbstoffmischungen in feiner Verteilung eingesetzt. Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfonate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 25 Gew.% und einen Dispergiermittelgehalt bis zu etwa 25 % eingestellt. Aus ökonomischen Gründen werden Farbstoffgehalte von 15 Gew.% meist nicht unterschritten.

Die Dispersionen können noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt,.daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt.

Der erforderliche pH-Wert der Färbeflotte wird vor bzw. auch während des Färbens durch Zugabe von Basen wie Alkalihydroxiden, z.B. wäßriger Natronlauge, Alkalihydrogencarbonaten, z.B. Natriumhydrogencarbonat oder Alkalicarbonaten z.B. Soda, eingestellt.

Um pH-Schwankungen zu minimieren, werden vorzugsweise Puffersubstanzen zugesetzt, wie sie z.B. in JSDC 77 (1979), S. 47, oder JSDC 79 (1981), S. 115, beschrieben sind. Besonders geeignete Puffersubstanzen sind solche, die im pH-Bereich zwischen 9 und 11 die größte Pufferwirkung besitzen. Geeignete Puffersysteme sind z.B. Essigsäure/Natriumpyrophosphat, Borsäure/Borax, Natriumdihydrogenphosphat/Dinatriumhydrogenphosphat, Phosphorsäure/Bernsteinsäure/Borsäure oder Kombinationen organischer Phosphorverbindungen mit Polycarbonsäuren. Die Einsatzmengen an Puffersystem liegen vorzugsweise zwischen 0,5 und 10 g/l.

Als Puffersysteme können auch die in der DE-A 39 38 631 beschriebenen Aminosäuren in der dort beschriebenen Weise eingesetzt werden.

### Beispiel 1

0,5 g einer 20 %igen Pulverpräparation des Farbstoffs der Formel Ib 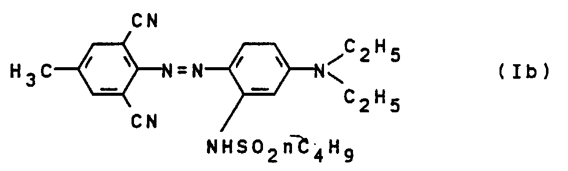 werden in einem Färbeautoklaven aus einer Färbeflotte bestehend aus 2 1 Wasser, 2 g eines Färbereihilfsmittels auf Basis Formaldehydkondensationsprodukt und 5 g einer Puffersubstanz, die eine Mischung aus einer organischen Phosphorverbindung und einer Polycarbonsäure darstellt, 45 min bei 130°C auf 100 g eines Gewebes aus Polyethylenterephthalat gefärbt, nachdem vorher der pH-Wert der Färbeflotte mit wäßriger Natronlauge auf 10 gestellt wurde. Danach wird die Färbung gespült, reduktiv gereinigt, sowie gespült und getrocknet. Man erhält so eine rote Färbung mit brillantem Farbton.

### Vergleichsversuch 1:

Die Färbung wird wiederholt, wobei als Puffersubstanz jetzt 4 g Natriumacetat zugesetzt und der pH-Wert der Färbeflotte mit Essigsäure auf 4,5 eingestellt wird. Die resultierende Färbung ist nahezu farbstärke- und farbtongleich, der Farbstoff hat sich bei pH 10 praktisch nicht zersetzt.

### Vergleichsversuch 2:

Die oben beschriebenen Färbungen bei pH 10 und 4,5 werden wiederholt, wobei aber anstelle des Farbstoffs der Formel Ib der handelsübliche Farbstoff der Formel III 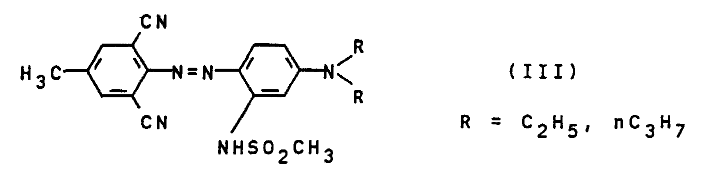 eingesetzt wird. Man erhält bei pH 10 eine Färbung, deren Farbtiefe nur ca. 45 % der Farbtiefe beträgt, die bei pH 4,5 erzielt wird.

### Beispiel 2:

57,4 g des Vorproduktes der Formel IV 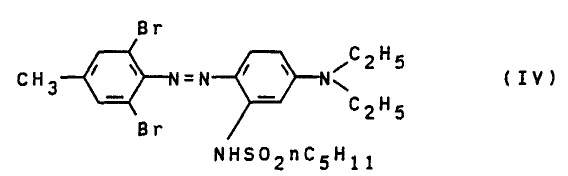 werden in 250 ml Dimethylformamid suspendiert und mit 11,8 g Zinkcyanid und 1 g Kupfer-I-Cyanid versetzt. Nach 30minütigem Erwärmen auf 100°C fällt man den Farbstoff mit 250 ml Wasser aus, saugt ihn ab, wäscht ihn mit 50%igem wässrigen Dimethylformamid und anschließend mit Wasser und trocknet ihn bei 50°C. Er löst sich im Aceton mit blaustichig roter Farbe und hat in Phthalsäureester sein Absorptionsmaximum bei 524 nm und färbt Polyester in klarer blaustichig roter Nuance auch bei pH-Werten >9. Der Farbton kommt daher dem von C.I. Disperse Red 60 sehr nahe.

In der nachfolgenden Tabelle sind weitere Farbstoffe aufgeführt, die nach dem erfindungsgemäßen Verfahren eingesetzt werden können. Sie färben Polyester in klaren blaustichig roten Tönen ähnlich dem Farbton von C.I. Disperse Red 60.

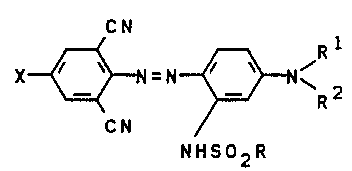

| X | R | R¹ | R² |
|---|---|---|---|
| CH₃ | n-C₃H₇ | C₂H₅ | C₂H₅ |
| CH₃ | i-C₃H₇ | C₂H₅ | C₂H₅ |
| CH₃ | i-C₄H₉ | C₂H₅ | C₂H₅ |
| CH₃ | sek-C₄H₉ | C₂H₅ | C₂H₅ |
| CH₃ | n-C₅H₁₁ | C₂H₅ | C₂H₅ |
| CH₃ | i-C₅H₁₁ | C₂H₅ | C₂H₅ |
| CH₃ | n-C₆H₁₃ | C₂H₅ | C₂H₅ |
| CH₃ | C₂H₅ | n-C₃H₇ | n-C₃H₇ |
| CH₃ | C₂H₅ | n-C₄H₉ | n-C₄H₉ |
| CH₃ | C₂H₅ | n-C₃H₇ | n-C₄H₉ |
| CH₃ | n-C₃H₇ | C₂H₅ | n-C₄H₉ |
| CH₃ | n-C₃H₇ | n-C₃H₇ | n-C₃H₇ |
| CH₃ | n-C₃H₇ | n-C₃H₇ | n-C₄H₉ |
| CH₃ | i-C₃H₇ | n-C₃H₇ | n-C₃H₇ |
| CH₃ | i-C₃H₇ | n-C₄H₉ | n-C₄H₉ |
| CH₃ | n-C₄H₉ | C₂H₅ | n-C₃H₇ |
| CH₃ | n-C₄H₉ | n-C₃H₇ | n-C₃H₇ |
| CH₃ | n-C₄H₉ | n-C₄H₉ | n-C₄H₉ |
| CH₃ | n-C₄H₉ | C₂H₅ | n-C₃H₇ |
| CH₃ | i-C₄H₉ | n-C₃H₇ | n-C₃H₇ |
| CH₃ | i-C₄H₉ | n-C₄H₉ | n-C₄H₉ |
| CH₃ | sek-C₄H₉ | n-C₃H₇ | n-C₃H₇ |
| CH₃ | n-C₅H₁₁ | n-C₃H₇ | n-C₃H₇ |
| CH₃ | n-C₅H₁₁ | n-C₃H₇ | n-C₄H₉ |
| CH₃ | n-C₆H₁₃ | n-C₃H₇ | n-C₃H₇ |
| CH₃ | (CH₂)₂CH(CH₃)₂ | C₂H₅ | C₂H₅ |
| CH₃ | (CH₂)₂CH(CH₃)₂ | C₂H₅ | n-C₃H₇ |
| CH₃ | (CH₂)₂CH(CH₃)₂ | n-C₄H₉ | n-C₄H₉ |
| C₂H₅ | C₂H₅ | C₂H₅ | C₂H₅ |
| C₂H₅ | C₂H₅ | i-C₃H₇ | n-C₃H₇ |
| C₂H₅ | C₂H₅ | n-C₄H₉ | n-C⁴H⁹ |
| C₂H₅ | n-C₃H₇ | C₂H₅ | C₂H₅ |
| C₂H₅ | n-C₃H₇ | n-C₃H₇ | n-C₃H₇ |
| C₂H₅ | i-C₃H₇ | C₂H₅ | C₂H₅ |
| C₂H₅ | i-C₃H₇ | C₂H₅ | n-C₄H₉. |
| C₂H₅ | i-C₃H₇ | n-C₄H₉ | n-C₄H₉ |
| n-C₃H₇ | n-C₃H₇ | n-C₃H₇ | n-C₃H₇ |
| n-C₃H₇ | n-C₄H₉ | C₂H₅ | n-C₄H₉ |
| i-C₃H₇ | C₂H₅ | C₂H₅ | C₂H₅ |
| i-C₃H₇ | C₂H₅ | n-C₃H₇ | n-C₃H₇ |
| i-C₃H₇ | C₂H₅ | n-C₄H₉ | n-C₄H₉ |
| i-C₃H₇ | n-C₃H₇ | C₂H₅ | C₂H₅ |
| i-C₃H₇ | n-C₄H₉ | C₂H₅ | C₂H₅ |
| i-C₃H₇ | n-C₄H₉ | n-C₃H₇ | n-C₃H₇ |
| CH₃ | CH₃ | n-C₃H₇ | n-C₃H₇ |
| CH₃ | CH₃ | n-C₄H₉ | n-C₄H₉ |
| C₂H₅ | CH₃ | n-C₃H₇ | n-C₃H₇ |

| X | R | R¹ | R² | Mischungsverhältnis |
|---|---|---|---|---|
| CH₃ | C₂H₅ | C₂H₅ | C₂H₅ | 50 |
| CH₃ | n-C₄H₉ | C₂H₅ | C₂H₅ | 50 |
| | | | | |
| CH₃ | C₂H₅ | C₂H₅ | C₂H₅ | 35 |
| CH₃ | n-C₄H₉ | n-C₃H₇ | n-C₃H₇ | 65 |
| | | | | |
| CH₃ | C₂H₅ | n-C₃H₇ | n-C₃H₇ | 45 |
| CH₃ | n-C₄H₉ | C₂H₅ | C₂H₅ | 55 |
| | | | | |
| CH₃ | C₂H₅ | n-C₄H₉ | n-C₄H₉ | 30 |
| CH₃ | n-C₄H₉ | n-C₄H₉ | n-C₄H₉ | 70 |
| | | | | |
| CH₃ | C₂H₅ | n-C₃H₇ | C₂H₅ | 85 |
| CH₃ | n-C₆H₁₃ | n-C₃H₇ | n-C₃H₇ | 15 |
| | | | | |
| CH₃ | i-C₃H₇ | n-C₄H₉ | n-C₃H₇ | 65 |
| CH₃ | n-C₄H₉ | C₂H₅ | C₂H₅ | 35 |
| | | | | |
| CH₃ | i-C₃H₇ | C₂H₅ | C₂H₅ | 40 |
| CH₃ | n-C₄H₉ | n-C₃H₇ | n-C₃H₇ | 60 |
| | | | | |
| CH₃ | i-C₃H₇ | n-C₄H₉ | n-C₄H₉ | 50 |
| CH₃ | C₂H₅ | n-C₄H₉ | n-C₄H₉ | 50 |
| | | | | |
| CH₃ | i-C₃H₇ | C₂H₅ | C₂H₅ | 55 |
| CH₃ | i-C₄H₉ | C₂H₅ | C₂H₅ | 45 |
| | | | | |
| CH₃ | i-C₃H₇ | n-C₄H₉ | n-C₄H₉ | 60 |
| CH₃ | n-C₅H₁₁ | C₂H₅ | C₂H₅ | 40 |
| | | | | |
| CH₃ | C₂H₅ | n-C₃H₇ | n-C₃H₇ | 35 |
| CH₃ | C₂H₅ | n-C₄H₉ | n-C₄H₉ | 65 |
| | | | | |
| CH₃ | i-C₃H₇ | n-C₃H₇ | n-C₃H₇ | 50 |
| CH₃ | i-C₃H₇ | C₂H₅ | n-C₄H₉ | 50 |
| | | | | |
| CH₃ | i-C₃H₇ | C₂H₅ | C₂H₅ | 65 |
| CH₃ | i-C₃H₇ | n-C₄H₉ | n-C₄H₉ | 35 |
| | | | | |
| CH₃ | n-C₄H₉ | C₂H₅ | C₂H₅ | 45 |
| CH₃ | n-C₄H₉ | n-C₃H₇ | n-C₃H₇ | 55 |
| | | | | |
| CH₃ | n-C₆H₁₃ | C₂H₅ | C₂H₅ | 70 |
| CH₃ | n-C₆H₁₃ | n-C₃H₇ | n-C₃H₇ | 30 |
| | | | | |
| C₂H₅ | C₂H₅ | n-C₃H₇ | n-C₃H₇ | 50 |
| C₂H₅ | n-C₄H₉ | C₂H₅ | C₂H₅ | 50 |
| | | | | |
| C₂H₅ | i-C₃H₇ | n-C₃H₇ | n-C₃H₇ | 35 |
| C₂H₅ | n-C₄H₉ | n-C₃H₇ | n-C₃H₇ | 65 |
| | | | | |
| C₂H₅ | n-C₄H₉ | C₂H₅ | n-C₃H₇ | 50 |
| C₂H₅ | n-C₆H₁₃ | C₂H₅ | n-C₃H₇ | 50 |
| | | | | |
| C₂H₅ | n-C₄H₉ | C₂H₅ | n-C₄H₉ | 95 |
| C₂H₅ | sek-C₄H₉ | C₂H₅ | C₂H₅ | 5 |
| | | | | |
| n-C₃H₇ | n-C₃H₇ | C₂H₅ | C₂H₅ | 55 |
| n-C₃H₇ | i-C₃H₇ | C₂H₅ | C₂H₅ | 45 |
| | | | | |
| i-C₃H₇ | C₂H₅ | n-C₃H₇ | n-C₃H₇ | 30 |
| i-C₃H₇ | n-C₄H₉ | n-C₃H₇ | n-C₃H₇ | 70 |
| | | | | |
| i-C₃H₇ | n-C₄H₉ | n-C₃H₇ | n-C₃H₇ | 40 |
| i-C₃H₇ | n-C₄H₉ | n-C₄H₉ | n-C₄H₉ | 60 |
| | | | | |
| CH₃ | n-C₄H₉ | n-C₃H₇ | n-C₃H₇ | 60 |
| C₂H₅ | n-C₄H₉ | n-C₃H₇ | n-C₃H₇ | 40 |
| | | | | |
| CH₃ | n-C₄H₉ | C₂H₅ | C₂H₅ | 85 |
| C₂H₅ | i-C₃H₇ | C₂H₅ | C₂H₅ | 15 |
| | | | | |
| CH₃ | n-C₄H₉ | n-C₄H₉ | n-C₄H₉ | 50 |
| C₂H₅ | C₂H₅ | n-C₃H₇ | n-C₃H₇ | 50 |
| | | | | |
| CH₃ | n-C₄H₉ | n-C₃H₇ | n-C₃H₇ | 70 |
| i-C₃H₇ | n-C₄H₉ | n-C₄H₉ | n-C₄H₉ | 30 |
| | | | | |
| CH₃ | C₂H₅ | n-C₃H₇ | n-C₃H₇ | 20 |
| CH₃ | n-C₄H₉ | n-C₃H₇ | n-C₃H₇ | 40 |
| CH₃ | n-C₄H₉ | n-C₄H₉ | n-C₄H₉ | 40 |
| | | | | |
| CH₃ | n-C₃H₇ | n-C₃H₇ | n-C₃H₇ | 25 |
| CH₃ | i-C₃H₇ | n-C₃H₇ | n-C₃H₇ | 25 |
| CH₃ | n-C₄H₉ | C₂H₅ | C₂H₅ | 50 |
| | | | | |
| CH₃ | n-C₄H₉ | n-C₃H₇ | n-C₃H₇ | 70 |
| CH₃ | C₂H₅ | n-C₃H₇ | n-C₃H₇ | 15 |
| C₂H₅ | C₂H₅ | n-C₃H₇ | n-C₃H₇ | 15 |
| | | | | |
| CH₃ | i-C₃H₇ | n-C₃H₇ | n-C₃H₇ | 33 |
| CH₃ | i-C₃H₇ | C₂H₅ | C₂H₅ | 33 |
| C₂H₅ | n-C₄H₉ | n-C₄H₉ | n-C₄H₉ | 33 |
| | | | | |
| CH₃ | CH₃ | n-C₃H₇ | n-C₃H₇ | 60 |
| CH₃ | CH₃ | n-C₄H₉ | n-C₄H₉ | 40 |
| | | | | |
| CH₃ | CH₃ | n-C₃H₇ | n-C₃H₇ | 10 |
| CH₃ | n-C₃H₇ | C₂H₅ | C₂H₅ | 90 |
| | | | | |
| CH₃ | CH₃ | n-C₃H₇ | n-C₃H₇ | 80 |
| C₂H₅ | CH₃ | n-C₃H₇ | n-C₃H₇ | 20 |

In der nachfolgenden Tabelle sind erfindungsgemäße Farbstoffe aufgeführt.

| X | R | R¹ | R² |
|---|---|---|---|
| CH₃ | n-C₅H₁₁ | C₂H₅ | n-C₃H₇ |
| CH₃ | n-C₅H₁₁ | n-C₃H₇ | n-C₃H₇ |
| CH₃ | n-C₅H₁₁ | n-C₄H₉ | n-C₄H₉ |
| CH₃ | (CH₂)₂CH(CH₃)₂ | C₂H₅ | C₂H₅ |
| CH₃ | (CH₂)₂CH(CH₃)₂ | n-C₃H₇ | n-C₃H₇ |
| CH₃ | n-C₆H₁₃ | C₂H₅ | C₂H₅ |
| CH₃ | n-C₆H₁₃ | n-C₃H₇ | n-C₃H₇ |
| CH₃ | n-C₆H₁₃ | C₂H₅ | n-C₃H₇ |
| CH₃ | n-C₆H₁₃ | n-C₄H₉ | n-C₄H₉ |
| C₂H₅ | n-C₅H₁₁ | C₂H₅ | C₂H₅ |
| C₂H₅ | n-C₅H₁₁ | n-C₃H₇ | n-C₃H₇ |
| C₂H₅ | (CH₂)₂CH(CH₃)₂ | C₂H₅ | C₂H₅ |
| C₂H₅ | (CH₂)₂CH(CH₃)₂ | n-C₃H₇ | n-C₃H₇ |
| C₂H₅ | n-C₆H₁₃ | C₂H₅ | C₂H₅ |
| C₂H₅ | n-C₆H₁₃ | n-C₃H₇ | n-C₃H₇ |
| i-C₃H₇ | n-C₅H₁₁ | n-C₃H₇ | n-C₄H₉ |
| i-C₃H₇ | n-C₅H₁₁ | C₂H₅ | C₂H₅ |
| i-C₃H₇ | n-C₆H₁₃ | C₂H₅ | C₂H₅ |
| n-C₃H₇ | n-C₅H₁₁ | n-C₃H₇ | n-C₃H₇ |

## Patentansprüche

1. Verfahren zum Färben von Polyester oder polyesterhaltigen Textilmaterialien bei pH 8 bis pH 11, dadurch gekennzeichnet, daß man einen oder mehrere Monoazofarbstoffe der allgemeinen Formel I 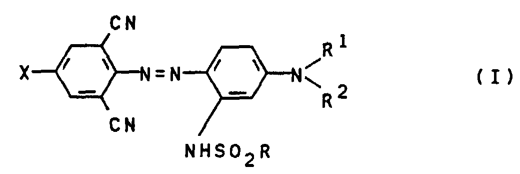 einsetzt, worin
x (C₁-C₃)-Alkyl
R (C₁-C₆)-Alkyl und
R¹ und R² unabhängig voneinander lineares (C₂-C₄)-Alkyl bedeuten, wobei R¹ und R² unabhängig voneinander (C₃-C₄)-Alkyl bedeuten, falls R für Methyl steht.

2. Verfahren gemäß Anspruch 1, dadurch gekennzeichnet, daß X Methyl bedeutet.

3. Verfahren gemäß Anspruch 1 und/oder 2, dadurch gekennzeichnet, daß R (C₃-C₅)-Alkyl bedeutet.

4. Verfahren gemäß einem oder mehreren der Ansprüche 1 bis 3, dadurch gekennzeichnet, daß R¹ und R² gleich sind und Ethyl oder n-Propyl bedeuten.

5. Verfahren gemäß einem oder mehreren der Ansprüche 1 bis 4, dadurch gekennzeichnet, daß es unter HT-Bedingungen in wäßriger Färbeflotte bei Temperaturen zwischen 120°C und 140°C in einem Färbeautoklaven ausgeführt wird.

6. Verfahren gemäß einem oder mehreren der Ansprüche 1 bis 5, dadurch gekennzeichnet, daß es bei pH 9 bis pH 10 ausgeführt wird.

7. Monoazofarbstoffe der allgemeinen Formel I 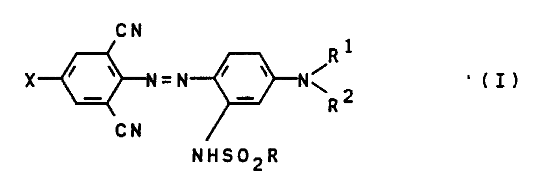 worin
X (C₁-C₃)-Alkyl
R (C₅-C₆)-Alkyl und
R¹ und R² unabhängig voneinander lineares (C₂-C₄)-Alkyl bedeuten.

8. Verfahren zur Herstellung von Monoazofarbstoffen der allgemeinen Formel I gemäß Anspruch 7, durch Cyanaustausch aus Verbindungen der allgemeinen Formel II 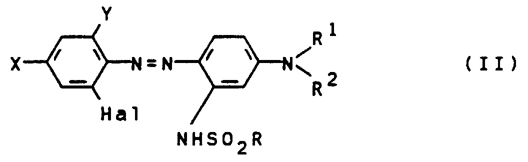 worin
Y Cyan oder Hal
Hal ein Halogenatom, wie Chlor oder insbesondere Brom, bedeuten und
X, R, R¹ und R² wie in Anspruch 7 angegeben definiert sind.

9. Verwendung von Monoazofarbstoffen der allgemeinen Formel I gemäß Anspruch 7 zum Färben und Bedrucken von hydrophoben Textilmaterialien.

## Claims

1. A process for dyeing polyester or polyester-containing textile materials at pH 8 to pH 11, which comprises using one or more monoazo dyes of the formula I 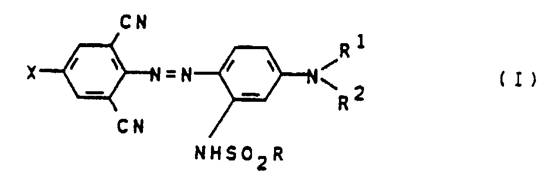 in which
X is (C₁-C₃)-alkyl,
R is (C₁-C₆)-alkyl and
R¹ and R², independently of one another, are linear (C₂-C₄)-alkyl, R¹ and R², independently of one another, being (C₃-C₄)-alkyl if R is methyl.

2. The process as claimed in claim 1, wherein X is methyl.

3. The process as claimed in claim 1 and/or 2, wherein R is (C₃-C₅)-alkyl.

4. The process as claimed in one or more of claims 1 to 3, wherein R¹ and R² are identical and are ethyl or n-propyl.

5. The process as claimed in one or more of claims 1 to 4, wherein it is carried out under HT conditions in an aqueous dyeing liquor at temperatures of between 120°C and 140°C in a dyeing autoclave.

6. The process as claimed in one or more of claims 1 to 5, wherein it is carried out at pH 9 to pH 10.

7. A monoazo dye of the formula I 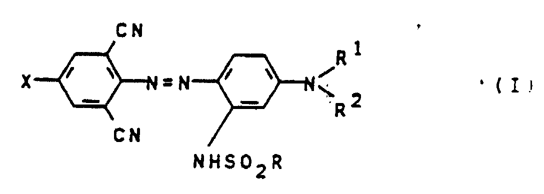 in which
X is (C₁-C₃)-alkyl,
R is (C₅-C₆)-alkyl and
R¹ and R², independently of one another, are linear (C₂-C₄)-alkyl.

8. A process for preparing monoazo dyes of the formula I as claimed in claim 7 by cyano exchange from compounds of the formula II 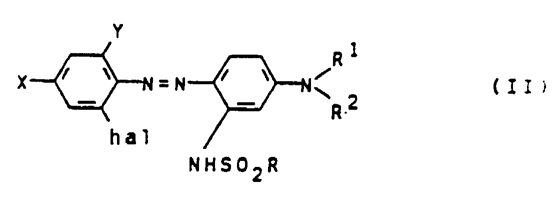 in which
Y is cyano or hal,
hal is a halogen atom, such as chlorine or, in particular, bromine, and
X, R, R¹ and R² are as defined in claim 7.

9. The use of a monoazo dye of the formula I as claimed in claim 7 for dyeing and printing hydrophobic textile materials.

## Revendications

1. Procédé de teinture de polyester ou de matériaux textiles contenant du polyester entre pH 8 et pH 11, caractérisé en ce que l'on utilise un ou plusieurs colorants monoazoïques de formule générale (I) 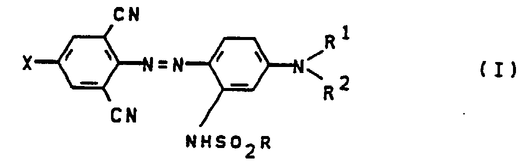 dans laquelle
X représente un alkyle en C₁-C₃,
R représente un alkyle en C₁-C₆ et
R¹ et R² représentent, indépendamment l'un de l'autre, un alkyle en C₂-C₄ linéaire, R¹ et R² représentant indépendamment l'un de l'autre, un alkyle en C₃-C₄ si R désigne un méthyle.

2. Procédé selon la revendication 1, caractérisé en ce que X représente un méthyle.

3. Procédé selon la revendication 1 et/ou 2, caractérisé en ce que R représente un alkyle en C₃-C₅.

4. Procédé selon l'une ou plusieurs des revendications 1 à 3, caractérisé en ce que R¹ et R² sont identiques et représentent un éthyle ou un n-propyle.

5. Procédé selon l'une ou plusieurs des revendications 1 à 4, caractérisé en ce qu'il est réalisé dans des conditions de HT dans un bain de teinture aqueux, à des températures comprises entre 120°C et 140°C dans un autoclave de teinture.

6. Procédé selon l'une ou plusieurs des revendications 1 à 5, caractérisé en ce qu'il est réalisé entre pH 9 et pH 10.

7. Colorants monoazoïques de formule générale I 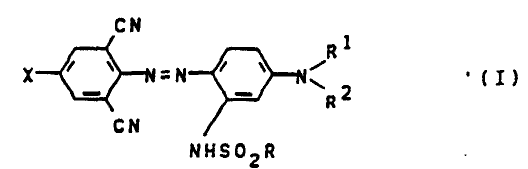 dans laquelle
X représente un alkyle en C₁-C₃,
R représente un alkyle en C₅-C₆ et
R¹ et R² représentent, indépendamment l'un de l'autre, un alkyle en C₂-C₄ linéaire.

8. Procédé de préparation de colorants monoazoïques de formule générale I selon la revendication 7, par échange de cyano à partir de composés de formule générale II 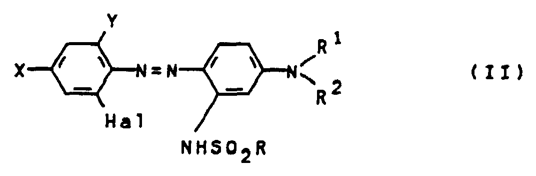 dans laquelle
Y représente un cyano ou Hal
Hal représente un atome d'halogène, tel que le chlore ou en particulier le brome et
X, R, R¹ et R² sont définis comme indiqués à la revendication 7.

9. Utilisation de colorants monoazoïques de formule générale I selon la revendication 7, pour la teinture et l'impression de matériaux textiles hydrophobes.
